# EUROPEAN PATENT SPECIFICATION

(11) **EP 3 251 257 B1**
(45) Date of publication and mention of the grant of the patent: **03.02.2021**
(21) Application number: 15879796.9
(22) Date of filing: 13.11.2015
(51) Int. Cl.: H04B 7/26, H04L 1/00, H04L 1/16, H04L 1/18, H04W 4/06

(54) **SYSTEM AND METHOD FOR DATA RETRANSMISSION**
SYSTEM UND VERFAHREN ZUR DATENNEUÜBERTRAGUNG
SYSTÈME ET PROCÉDÉ POUR UNE RETRANSMISSION DE DONNÉES

(30) Priority: 30.01.2015 US 201514610824
(43) Date of publication of application: 06.12.2017
(73) Proprietor: Huawei Technologies Co., Ltd., Longgang District Shenzhen, Guangdong 518129 (CN)
(72) Inventor: STEPHENNE, Alex, Stittsville, Ontario K2S 2H3 (CA); LEROUX, Philippe, Vanier, Ontario K1Y 7S5 (CA); CALLARD, Aaron, Ottawa, Ontario K2B 7 (CA); SENARATH, Nimal Gamini, Ottawa, Ontario K2G 6P5 (CA)
(74) Representative: Thun, Clemens
(86) International application number: PCT/IB2015/058798
(87) International publication number: WO 2016/120695

(56) References cited:
- EP-A1- 2 567 490
- WO-A1-2014/042377
- CN-A- 101 197 640
- CN-A- 101 399 643
- CN-A- 101 399 643
- US-A1- 2003 023 746
- US-A1- 2009 262 678
- US-A1- 2014 241 286

## Description

### FIELD

Embodiments described herein generally relate to the field of wireless communication systems and methods, and more particularly, to wireless communication systems and methods employing data transmission with Hybrid Automatic Repeat reQuest (HARQ).

### BACKGROUND

In modern wireless communication systems, such as Long Term Evolution (LTE), two mechanisms typically cooperate to detect and correct errors due to channel impairments: Hybrid Automatic Repeat reQuest (HARQ) and Automatic Repeat reQuest (ARQ). The HARQ process is generally implemented at the Medium Access Control (MAC) layer to correct error packets in the physical (PHY) layer while the ARQ process is performed at the Radio Link Control (RLC) layer to correct any residual HARQ errors.

For example, US 2009/0262678A1 refers to communications between source and destination devices. Such communications may involve multiple cooperating devices that retransmit (e.g., simultaneously retransmit) transmissions sent by a source device. Thus, the delivery of transmissions from source devices to destination devices may involve two or more "hops" (e.g., a first "hop" comprising an initial transmission, and a second "hop" comprising two or more relay transmissions).

Further, CN 101399643A refers to a method for controlling data transmission in an acknowledgement mode. The method comprises the following steps: after a protocol data unit is transmitted based on acknowledgement mode, when affirmative acknowledgement message of hybrid automatic error request repeat is received, according to indication information including information of indicating repeat or continuous transmission of new data, the received affirmative acknowledgement message of the hybrid automatic error request repeat is inspected whether the message is correct or not; when correction of the received affirmative acknowledgement message is affirmed, a corresponding protocol data unit is affirmed to be sent successfully, related protocol layers are notified, and related buffers are cleared.

US 2003/023746 A1 refers to a system and method for exchanging a plurality of messages between a server and a client over a communication link to support congestion control therebetween. The present system and method provide congestion control in real-time streaming applications over the Internet between the server and the client, by employing a data structure in NACK-based applications to support multiple retransmission attempts per lost packet. The ability to control network traffic without employing a retransmission timeout, RTO, protocol in NACK-based applications allows for the efficient handling of a large variety of network traffic, including video and multimedia traffic.

EP 2 567 490 A1 discloses a receiving node that makes an early estimate of the outcome of a decoding attempt and sends a corresponding early feedback, EHF, to the sending node. This has an effect of enabling a fast retransmission of the data by the sending node in case the decoding by the receiving node is likely to fail. An advantage of this is that any delays due to data retransmission may be minimized, resulting in a higher average throughput of the data transmission between the nodes.

Once a packet is sent as part of a HARQ process implemented at a transmitter (e.g. User Equipment (UE) for uplink transmissions), the transmitter buffers the transmitted data and the HARQ process waits for acknowledgement information from the receiver (e.g. a base station). Receivers typically send acknowledgements (ACKs) or negative-acknowledgements (NACKs) to indicate whether or not a previous transmission was successfully decoded. When previous transmissions are not successfully decoded (e.g. a NACK is sent by the receiver), the transmitter resends the original transmission (or forward error correction (FEC) bits related thereto) via HARQ operation. The transmitter will retransmit the data until it receives an ACK from the receiver. Once an ACK is received, the transmission is emptied from the transmitter's transmit buffer and the HARQ process is made available for a new transport block. In protocols that do not provide reliable delivery of upper layer packets, the transmitter may move on to transmitting the next transport block even if the receiver has not successfully decoded the previous transport block. A secondary level of ARQ, which is provided in the RLC layer, is therefore required in the upper protocol layers to ensure that lost data bits are actually delivered.

The above-mentioned error detection and correction process is limited by the delay between transmission of a packet and receipt of an acknowledgement. In order to overcome this issue, multiple parallel stop-and-wait processes may be provided as part of the HARQ mechanism implemented at the transmitter. However, HARQ signaling overhead and memory requirements grow with the number of parallel processes. In addition, failed HARQ processes may prove difficult to recover without an increase in delay and reduction in throughput.

Therefore, there is a need for an improved communication system and method employing data transmission with HARQ.

### SUMMARY

In a first aspect a method for requesting data according to claim 1.

In a second aspect a base station according to claim 2 is provided.

### DESCRIPTION OF THE FIGURES

In the figures,
Figure 1 is a schematic diagram of a wireless communication system, in accordance with one embodiment;
Figure 2 is a block diagram of protocol structures for a transmitter and a receiver, in accordance with one embodiment;
Figure 3 is a block diagram of components of the transmitter and the receiver of Figure 2, in accordance with one embodiment;
Figure 4 is a flowchart of a method for data retransmission at a transmitter, in accordance with one embodiment;
Figure 5 is a flowchart of the step at Figure 4 where a determination of whether data transmission was successful is made, in accordance with one embodiment;
Figure 6 is a flowchart of the step at Figure 4 where a determination of whether data transmission was successful is made, in accordance with another embodiment;
Figure 7 is a flowchart of the step at Figure 4 of storing data in memory, in accordance with one embodiment;
Figure 8 is a flowchart of the step at Figure 4 of storing data in memory, in accordance with another embodiment;
Figure 9 is a flowchart of the step at Figure 4 of retransmitting data on request, in accordance with one embodiment;
Figure 10 is a flowchart of the step at Figure 9 of proceeding with retransmission, in accordance with one embodiment;
Figure 11 is a flowchart of the step at Figure 9 of proceeding with retransmission, in accordance with another embodiment;
Figure 12 is a flowchart of a method for data retransmission at a receiver, in accordance with one embodiment;
Figure 13 is a flowchart of the step at Figure 12, determining that an assessment as to whether retransmission of previously acknowledged data is required is inconclusive, in accordance with one embodiment;
Figure 14 is a flowchart of the step at Figure 12 of determining that retransmission of previously acknowledged data is required, in accordance with one embodiment;
Figure 15 is a flow diagram of a transmitter and a receiver operating according to a data retransmission mechanism, in accordance with a first embodiment;
Figure 16 is a flow diagram of a transmitter and a receiver operating according to a data retransmission mechanism, in accordance with a second embodiment; and
Figure 17 is a flow diagram of a transmitter and a receiver operating according to a data retransmission mechanism, in accordance with a third embodiment.

It will be noted that throughout the appended drawings, like features are identified by like reference numerals.

### DETAILED DESCRIPTION

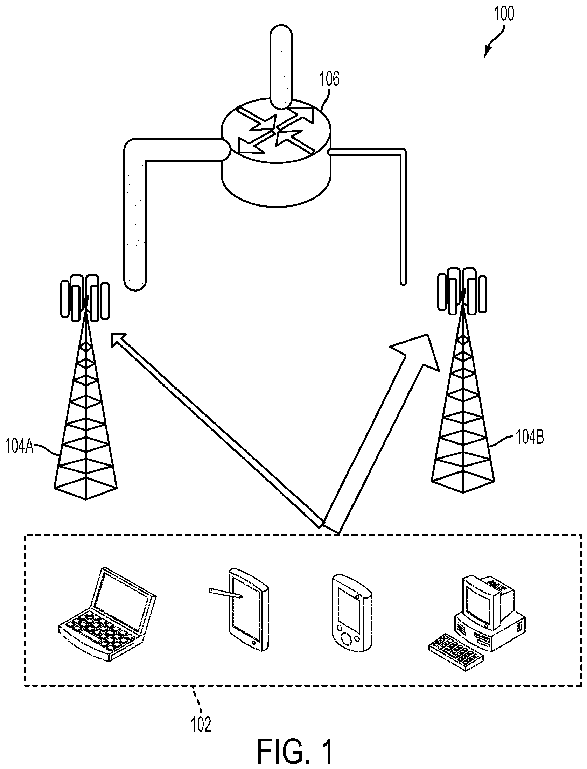

This invention is defined and limited by the scope of the appended independent claims. Referring now to Figure 1, a wireless communication system 100 in accordance with an illustrative embodiment will now be described. The system 100 comprises a first network device 102 communicating signals, e.g. uplink signals, with a remote end, e.g. second network devices 104A and 104B, the first and second network devices 102, 104A, 104B using wireless links. In the system 100, regardless of which second network device(s) (104A, 104B, or both) send scheduling grants, some scheduled uplink data is meant to transit through device 104A while some scheduled uplink data is meant to transit through device 104B. The second network devices 104A and 104B are in turn connected to a third network device 106, e.g. a gateway, that forwards data to the outside world (e.g. the core network). In one embodiment, the communication system 100 is a Cloud Radio Access Network (CRAN) system. It should, however, be understood that other wireless networks may apply. For example, the system 100 may be used to communicate downlink signals between the first network device 102 and the second network devices 104A, 104B. It should also be understood that wired networks may also apply. Therefore, links between the second network device 104A and the third network device 106 or links between the second network device 104B and the third network device 106 may be wired or wireless.

The first network device 102 may be a User Equipment (UE) that represents any one of a plurality of suitable end user devices, including, but not limited to, a wireless transmit/receive unit, mobile station, fixed or mobile subscriber unit, laptop, personal computer (PC), pager, personal digital assistant (PDA), tablet, touchpad, e-reader, smart phone, cellular phone, wireless sensor, consumer electronics device, or the like, configured to communicate with the second network devices 104A and 104B. The first network device 102 may have a network interface in order to communicate with other components, to access and connect to network resources, to serve an application and other applications, and perform other computing applications by connecting to a network (or multiple networks), capable of carrying data. It should be understood that although a single first network device 102 is illustrated for sake of simplicity, the system 100 may comprise a plurality of first network devices as in 102.

The second network devices 104A, 104B may be any type of devices configured to wirelessly interface with the first network device 102 to facilitate access to one or more communication networks (not shown), such as a Public Switched Telephone Network, or a data network such as the Internet. Each second network device 104A, 104B is a base station (BS) that may include (or be) one or more network devices, such as a base transceiver station (BTS), a Node-B (NodeB), an evolved NodeB (eNodeB), a Home NodeB, a Home eNodeB, a site controller, an access point (AP), or a wireless router. While the second network devices 104A, 104B are each depicted as a single element, it should be understood that the second network devices 104A, 104B may include any number of interconnected base stations and network elements.

The first network device 102 and the second network devices 104A, 104B may communicate over an air interface (not shown), which may be any suitable wireless communication link, including, but not limited, to radio frequency (RF), microwave, and the like. The air interface may be established using any suitable radio access technology and the communications system 100 may be a multiple access system employing one or more channel access schemes, such as Code Division Multiple Access (CDMA), Time Division Multiple Access (TDMA), Frequency Division Multiple Access (FDMA), Orthogonal Frequency Division Multiple Access (OFDMA), Single-Carrier Frequency Division Multiple Access (SC-FDMA), and the like. Accordingly, technologies including, but not limited to the following may be implemented by the first network device 102 and the second network devices 104A, 104B: wideband CDMA (WCDMA), High-Speed Packet Access (HSPA), Evolved HSPA (HSPA+), High- Speed Downlink Packet Access (HSDPA), High-Speed Uplink Packet Access (HSUPA), Long Term Evolution (LTE), LTE- Advanced (LTE-A), Universal Mobile Telecommunications System (UMTS) Terrestrial Radio Access (UTRA), Evolved UMTS Terrestrial Radio Access (E-UTRA), IEEE 802.16 (i.e., Worldwide Interoperability for Microwave Access (WiMAX)), CDMA2000, CDMA2000 IX, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

Each one of the first network device 102 and the second network devices 104A, 104B may include at least one processor (not shown) connected to a memory (not shown). The processor may be connected to a transceiver (not shown) configured to transmit and receive data frames through an antenna (not shown). The transceiver may include any suitable hardware structure for generating signals for at least one of wireless transmission and processing signals received wirelessly. A Coder-Decoder (CODEC) (not shown) may also be provided and configured to encode and decode a digital data frame. The CODEC may be implemented by software programs, hardware chips (including digital signal processor and buffers), or a combination of hardware and software. The CODEC may implement coding schemes for Forward Error Correction (FEC), channel security, or other purposes. In an embodiment, the CODEC may be used at any one of the first network device 102 and the second network devices 104A, 104B to add error correction to a frame received from upper layers.

The memory accessible by the processor may receive and store data. The memory may be a main memory, such as a high speed Random Access Memory (RAM), or an auxiliary storage unit, such as a hard disk, flash memory, or a magnetic tape drive. The memory may be any other type of memory, such as a Read-Only Memory (ROM), Erasable Programmable Read-Only Memory (EPROM), electrically-erasable programmable read-only memory (EEPROM), Ferroelectric RAM (FRAM), or optical storage media such as a videodisc and a compact disc. In an embodiment, the memory may be used to buffer data. The processor may access the memory to retrieve data. The processor may be any device that can perform operations on data. Examples are a central processing unit (CPU), a front-end processor, a microprocessor, a field programmable gate array (FPGA), a reconfigurable processor, and a network processor. Applications may be running on the processor and configured to perform various tasks. An output may be provided to the first network device 102, e.g. via a suitable output device, including but not limited to a display device, a touchscreen, or the like.

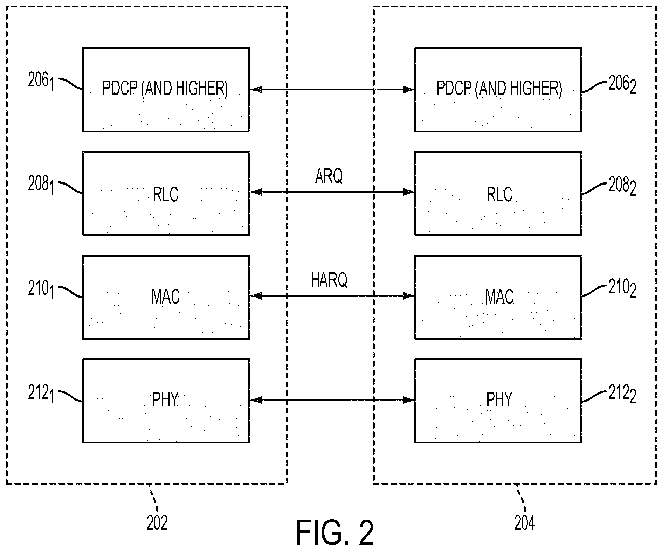

Figure 2 illustrates protocol structures for a transmitter 202 and a receiver 204. As used herein, the term transmitter (or transmitting node) may refer to the first network device (reference 102 in Figure 1, e.g. UE for uplink) while the term receiver (or receiving node) may refer to one of the second network devices (references 104A, 104B in Figure 1, e.g. base stations for uplink), e.g. device 104A. It should however be understood that, in some embodiments discussed further below, the system 100 of Figure 1 may comprise a secondary entity (not shown), e.g. a joint processing unit, a central RLC entity, or a control unit, such that the term receiver also includes the secondary entity in these cases.

As can be seen in Figure 2, the illustrated transmitter 202 comprises a Packet Data Convergence Protocol (PDCP) (and higher, e.g. Radio Resource Control (RRC)) layer 206₁, a Radio Link Control (RLC) layer 208₁, a Medium Access Control (MAC) layer 210₁, and a physical (PHY) layer 212₁. Similarly, the illustrated receiver 204 comprises a PDCP (and higher) layer 206₂, an RLC layer 208₂, a MAC layer 210₂, and a PHY layer 212₂.

In the illustrated example, each RLC layer 208₁ or 208₂ comprises an RLC entity (not shown) that performs the RLC layer functions, e.g. concatenation, segmentation, re-segmentation, duplicate detection, in-sequence delivery of units of data, recovery, and data unit discarding. In particular, RLC entities perform Automatic Repeat reQuest (ARQ) functions, whereby, when a missing unit of data is detected, retransmission by the ARQ function is used to guarantee lossless transmission. The ARQ functions of each RLC layer 208₁ or 208₂ are performed to correct any residual errors following Hybrid Automatic Repeat reQuest (HARQ) processes implemented at the MAC layers 210₁, 210₂ to correct error packets in the PHY layers 212₁, 212₂.

It should be understood that, although the term "data unit" or "packet" is often used in higher protocol layers to refer to data bits while the term "transport block" (TB) is sometimes used in lower layers, the terms frame, packet, transport block, and data unit are used interchangeably herein to designate data bits which are delimited with a clear start and end in the physical layer or higher layers.

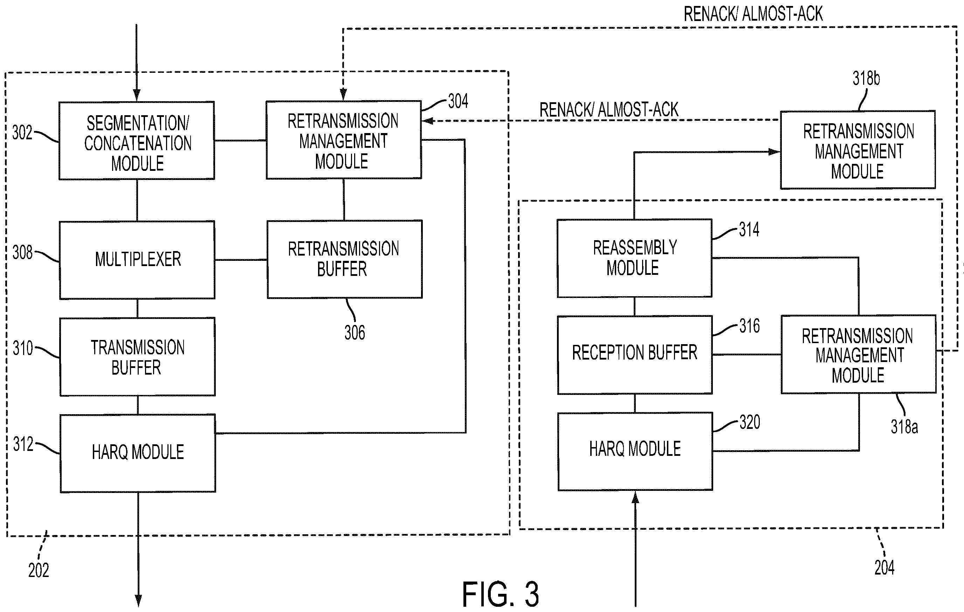

Referring now to Figure 3, an illustrative embodiment of components of the transmitter 202 and receiver 204 of Figure 2 will now be described. The illustrated transmitter 202 comprises a segmentation/concatenation module 302, a retransmission management module 304 (referred to herein as a transmitter retransmission management module), a retransmission buffer 306, a multiplexer 308, a transmission buffer 310, and a HARQ module 312 (referred to herein as a transmitter HARQ module). The illustrated receiver 204 comprises a reassembly module 314, a reception buffer 316, at least one of a first retransmission management module 318a and a second retransmission management module 318b (referred to herein as receiver retransmission management modules), and a HARQ module 320 (referred to herein as a receiver HARQ module). As will be explained further below, either the first or the second receiver retransmission management modules 318a, 318b or both the first and the second receiver retransmission management modules 318a, 318b, may be provided. The transmitter and receiver HARQ modules 312, 320 may be implemented by lower layer entities, e.g. at the MAC layer (references 210₁, 210₂ in Figure 2), while the remaining entities may be implemented at any or all of the MAC layer, the RLC layer (references 208₁, 208₂ in Figure 2), and higher layers. Although the entities pertaining to retransmission are presented and discussed herein, it should be understood that the receiver 202 and the transmitter 204 may include additional components that may handle other functionalities.

The transmitter 202 receives data units (referred to as service data units (SDUs)) from upper layers (e.g. PDCP or RRC). The received data consists of new data or retransmitted data. The segmentation/concatenation module 302 may then segment and concatenate the SDUs into Packet Data Units (PDUs). The multiplexer 308 performs multiplexing between the segmented data received from the segmentation/concatenation module 302 and data retrieved from the retransmission buffer 306. The transmission buffer 310 then stores the multiplexer's output until a transmission opportunity is indicated by a MAC scheduler (not shown). One new PDU is typically permitted per transmission opportunity. A copy of the transmission buffer 310 may further be stored in the retransmission buffer 306 for possible retransmission. Data from the transmission buffer 310 is then sent to the transmitter HARQ module 312 for transmission to the receiver 204 over the air.

Each HARQ module 312, 320 handles HARQ functionality and may run multiple parallel HARQ processes. At the transmitter HARQ module 312, packets are assigned sequential transmission sequence numbers and are sent towards the receiver 204. At the receiver HARQ module 320, the data transmissions are received and decoded to recover each transmitted packet. The receiver HARQ module 320 then indicates to the receiver retransmission management module 318a whether the data was received properly and generates acknowledgement feedback signals (ACK/NACK) accordingly. Acknowledgements may be sent to the transmitter 202 periodically or upon request by the transmitter 202. It should be understood that the transmitter HARQ module 312 may also indicate to the transmitter retransmission management module 304 whether the data was transmitted properly after the data exited the transmission buffer 310. The receiver HARQ module 320 then provides the recovered packets to higher layers in the proper order. Because HARQ operation may cause out-of-sequence reception of packets due to multiple HARQ processes running in parallel, the reception buffer 316 may implement a reordering function to reorder the received packets and guarantee in-order delivery. The reassembly module 314 then reassembles upper layer data units (e.g. SDUs) if receipt of the PDUs completes assembly of the upper layer data units. Assembled data units are then passed to the upper layer (e.g. PDCP and RRC).

If a NACK is sent to the transmitter 202 (or no ACK is received before a predetermined time period elapses), the transmitter 202 concludes to unsuccessful transmission of the corresponding packet and retransmits the packet through a HARQ process implemented by the transmitter HARQ module 312, provided the number of allowed retransmissions for the packet is below a predetermined threshold. If no NACK is sent to the transmitter 202, the transmitter HARQ module 312 discards the packet, which is handled by an ARQ process performed at the RLC layer (reference 204₁ in Figure 2). Conventionally, if an ACK is received at the transmitter 202, the transmission buffer 310 is emptied. The received sequence number is then updated to advance the sliding transmit window (which represents the logical boundary of the total number of packets yet to be acknowledged by the receiver 204) and allow further transmissions. In this manner, each time an ACK is received at the transmitter 202, the associated HARQ process is flushed and made available for a new transport block.

However, a drawback of the above-mentioned ACK/NACK mechanism is its reliance on synchronization between two elements, namely, a transmitter (e.g. UE 102 for uplink) and a receiver (e.g. BS 104A for uplink). Those skilled in the art will appreciate that a UE is the receiver for the downlink case. Although various solutions have been proposed to overcome this issue, these solutions have disadvantages. One such solution is to increase the number of HARQ processes performed at the MAC layer. However, this would increase the signaling overhead used to identify HARQ processes. Another solution may be to use a large RLC transmission window, meaning that the ARQ process would take longer. This would, however, decrease ARQ reaction time, which is undesirable because it makes it difficult to achieve the high data rates of the Transmission Control Protocol (TCP). Also, HARQ gains would be independent of ARQ windows, unless the amount of resources/transmission used for HARQ is reduced as well. Another option is to indicate to the RLC entity when to retransmit lower layer packets, but this approach would require a new type of RLC message.

In order to overcome these issues, and as will be discussed further below, it is proposed herein to recover HARQ processes, e.g. previously-acknowledged HARQ processes, and related data. This may be achieved by introducing new HARQ feedback information values or signals, referred to herein as ALMOST-ACK and RENACK. The ALMOST-ACK and RENACK feedbacks may be sent to the transmitter retransmission management module 304 by at least one of the receiver retransmission management modules 318a and 318b. The RENACK feedback is used to indicate to the transmitter 202 that previously-transmitted data, for which a transmission acknowledgement was previously received (or inferred by the transmitter), is to be retransmitted. In one embodiment, receipt of the transmission acknowledgement causes the transmitter to make the previously-transmitted data inaccessible to a scheduler (e.g. through a given HARQ process) while receipt of the RENACK feedback causes the transmitter to make the previously-transmitted data accessible to the scheduler for retransmission.

The ALMOST-ACK feedback is used to indicate to the transmitter that the receiver has not fully determined whether retransmission is required and that retransmission of the previously-transmitted data is to be delayed until it is established that retransmission is required. In some embodiments, the ALMOST-ACK feedback indicates to the transmitter that the upper layer (e.g. RLC) processes should carry on as if the data had been acknowledged but the previously-transmitted data should remain buffered, e.g. in case a future retransmission is requested. In some embodiments, the retransmission may be requested by RENACK. Receipt of the ALMOST-ACK feedback may cause the transmitter to render the previously-transmitted data inaccessible to a scheduler through the given HARQ process. The RENACK feedback would then cause the transmitter to make the previously-transmitted data accessible to the scheduler. The data to be retransmitted may be made inaccessible to the scheduler because the data was previously positively acknowledged (e.g. through an ACK). Still, it should be understood that under various situations, messages may cause data to become inaccessible to the scheduler. For instance, the data may become inaccessible to the scheduler (and accordingly may require subsequent retransmission using the RENACK) as a result of a handover, a transition into idle mode, or a control channel being received for scheduling grants (using the given HARQ process). Other control messages may cause the data to become inaccessible to the scheduler.

As will be discussed further below, the RENACK feedback information value may be used alone or in combination with the ALMOST-ACK feedback information value. For example, RENACK may be used without ALMOST-ACK in cases where RENACK feedback is not frequent, to enhance throughput by making assumptions as to the detection success rate at a higher aggregation point. The ALMOST-ACK feedback information value may also be used alone or in combination with the RENACK feedback information value. For example, ALMOST-ACK may be used without RENACK in cases where a receiver wishes to delay retransmission of a previously-transmitted data unit that was interpreted by the transmitter as unsuccessfully transmitted (e.g. due to the receiver failing to send a receipt acknowledgement before expiry of a timeout).

As illustrated in Figure 3, depending on the embodiments, at least one of the first and second receiver retransmission management modules 318a and 318b may be provided and may output control plane signaling, i.e. ALMOST-ACK and RENACK feedback signals (as illustrated by the dotted arrows in Figure 3), to the transmitter retransmission management module 304. The first receiver retransmission management module 318a may be implemented at the MAC layer while the second receiver retransmission management module 318b may be provided adjacent to the receiver 204 and implemented at the RLC layer or above. The ALMOST-ACK and RENACK feedback signals may be sent in a HARQ process/PDU header or may be sent on a separate control channel.

For example, in one embodiment, only the first retransmission management module 318a is provided at the receiver 204 and is used to transmit ALMOST-ACK and RENACK feedback signals to the transmitter 202. This may be the case when the communication system (reference 100 in Figure 1) comprises a single receiver 204, e.g. a local access point, that serves as a mesh network relay. In this case, the receiver 204 may determine that it is unable to forward the data received from the transmitter 202 and may accordingly send (using the first retransmission management module 318a) a RENACK signal to the transmitter 202. In another example, the receiver 204 may use a suitable technique, such as successive interference cancellation (SIC), to determine whether retransmission is to be requested. Using SIC, the receiver 204 may indeed be making an assumption that in the next transmission time interval (TTI), the receiver 204 will receive and decode enough information to remove interference in a previously-received transport block and therefore decode this block. In some embodiments, the receiver 204 may then send an ALMOST-ACK signal accordingly. However, if the assumption is incorrect, the receiver 204 would send a RENACK signal to request retransmission of the data it was ultimately unable to decode. In cases where the data sent by the transmitter 202 is not buffered at the receiver 204, the receiver 204 may receive a NACK feedback signal from a relay or router (not shown) provided further upstream. The receiver 204 would accordingly determine that a RENACK signal is to be sent to the transmitter 202 and may use the first retransmission management module 318a to do so.

In another embodiment, only the second retransmission management module 318b is provided and used to transmit ALMOST-ACK and RENACK feedback signals to the transmitter 202. This may be the case, for example, in joint processing embodiments where there is coordination between multiple entities (e.g. base stations as in 104A and 104B in Figure 1) that are simultaneously transmitting to or receiving from transmitters, e.g. UEs as in 102 in Figure 1. In this case, a secondary entity (not shown), such as a joint processor located at an access point along the backhaul line, may receive all signals from the base stations and decode the received signals. The second retransmission management module 318b may be provided in the secondary entity. Using the second retransmission management module 318b, the secondary entity may, upon determining that the decoding process was unsuccessful, send a RENACK signal to the transmitter 202 for requesting retransmission of the data. Therefore, in this case, the RENACK signal would not be sent by the base stations themselves.

In other embodiments, both receiver retransmission management modules 318a and 318b may be provided. For example, the receiver 204 may comprise the first retransmission management module 318a and the second retransmission management module 318b may also be provided at a higher level. As another example, the second retransmission management module 318b may be provided in a different node of the network, the node receiving data plane from the receiver 204. The receiver 204 may determine (e.g. using the first retransmission management module 318a) that it needs to request retransmission because it failed to decode the data received from the transmitter 202. However, the RENACK may be requested at the higher level, e.g. by the second retransmission management module 318b. The second retransmission management module 318b may then communicate with the first retransmission management module 318a, asking the first retransmission management module 318a to send the RENACK signal to the transmitter 202. Such an embodiment may occur, for example, in the case where the RLC functionalities are not only provided in a single receiver as in 204 but also at a gateway (not shown) aggregating data from multiple receivers. One example is multipoint reception. In multiple reception, every receiver attempts to decode and forward data but a central entity (e.g. a central RLC entity) aggregates the data. The central entity might ask to recover a PDU from an access point as well as have the access point send a RENACK signal if the access point also failed to decode the data.

It should be understood that other embodiments may apply.

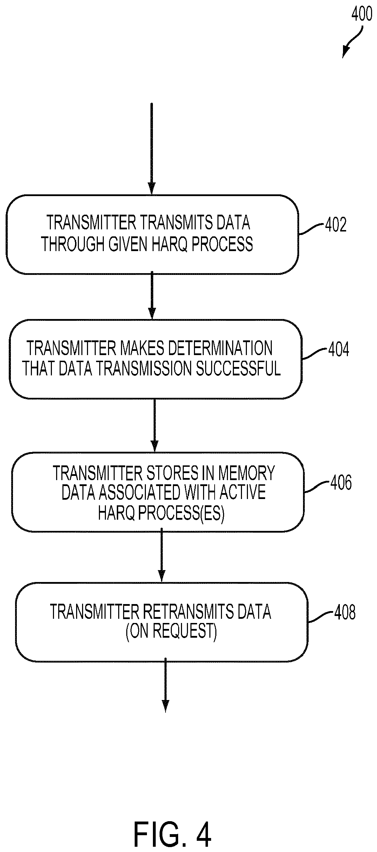

Referring to Figure 4 in addition to Figure 3, a method 400 for data retransmission at a transmitter, in accordance with one embodiment, will now be described. The method 400 may be implemented at the transmitter retransmission management module 304 of Figure 3. In some embodiments, some method steps may be implemented at the transmitter HARQ module 312 of Figure 3. Other implementations may apply. The illustrated method 400 comprises the transmitter transmitting data (at step 402) through a given HARQ process. The next step 404 is to make a determination that data transmission was successful. At step 406, the transmitter stores in memory (e.g. in the retransmission buffer 306 of Figure 3) data associated with (e.g. transmitted through) given HARQ process(es). As will be discussed further below, the stored data may comprise all data (e.g. copies thereof) transmitted by the transmitter HARQ processes (e.g. by the HARQ module 312) over a predetermined period or window. Alternatively, the stored data may comprise a copy of selected data (e.g. a given number of bits of data that was previously acknowledged by the receiving end) and for which the receiver has now indicated (e.g. through an ALMOST-ACK) a potential need for retransmission. As will be discussed further below, at step 408, the transmitter then retransmits previously-transmitted data on request (e.g. upon receiving the RENACK signal).

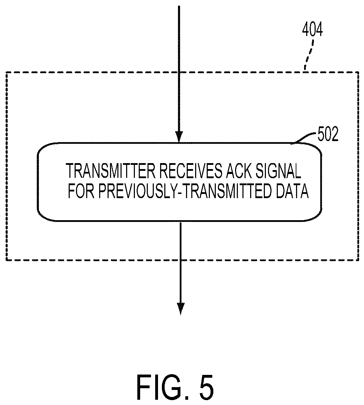

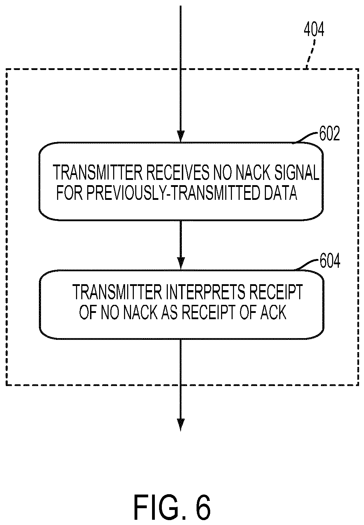

It should be understood that the manner in which the transmitter determines (at step 404) that data transmission was successful depends on the communication protocol in place between the transmitter and the receiver. Referring to Figure 5, in one embodiment, the step 404 of making a determination that data transmission was successful comprises receiving, at step 502, a positive acknowledgement (or ACK) of the data previously transmitted (at step 402 of Figure 4) and making the determination accordingly. In another embodiment illustrated in Figure 6, the step 404 of making a determination that data transmission was successful comprises determining at step 602 that no negative acknowledgement (or NACK) has been received (e.g. within a predetermined time period) for the previously-transmitted data. At step 604, the transmitter may accordingly interpret the failure to receive a negative acknowledgement as receiving a positive acknowledgement.

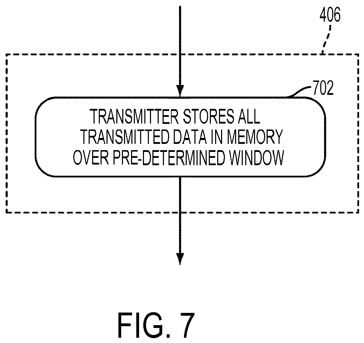

Referring to Figure 7, in one embodiment, the step 406 of storing in memory data associated with given HARQ process(es) comprises storing in memory at step 702 all data transmitted by active HARQ processes. In one embodiment, this comprises storing in memory the HARQ buffer associated with any given HARQ process as soon as a positive acknowledgement (ACK) is received (from the receiver) for that data. The data stored in the memory may therefore comprise data that has been previously acknowledged by the receiver. In this manner, previously-acknowledged data related to a given HARQ process may be retrieved from memory at any time that the receiver requests retransmission of that data. In one embodiment, the data may be buffered in memory over a window of any suitable size, with the window size varying according to various factors, including, but not limited to, network traffic.

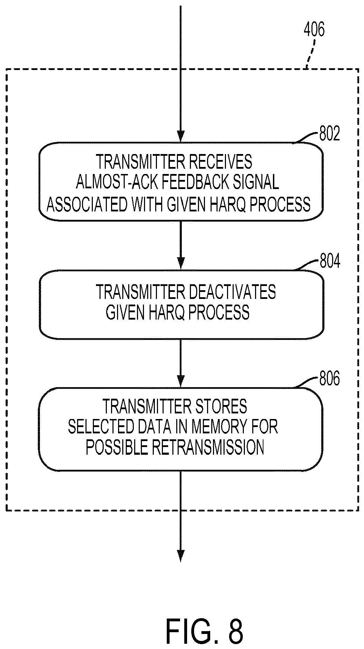

Referring to Figure 8, in another embodiment, the step 406 of storing in memory data associated with given HARQ process(es) comprises at step 802 receiving from the receiver an ALMOST-ACK feedback signal. The ALMOST-ACK signal indicates that selected data (e.g. a selected number of bits) associated with (e.g. transmitted through) a given HARQ process should be stored in memory for potential recovery. As discussed above, in one embodiment, the data in question is previously-acknowledged data. Using the ALMOST-ACK signal provides freedom as to which data to buffer. Therefore, using the ALMOST-ACK signal allows the buffer size to be reduced at the transmitter.

Receipt of the ALMOST-ACK signal indicates to the transmitter that the previously-acknowledged data and the corresponding HARQ process may have to be recovered (e.g. upon the transmitter receiving the RENACK signal) and that the data and corresponding HARQ process should therefore not be discarded. As a result, in one embodiment illustrated at step 804, the transmitter deactivates the given HARQ process, thereby no longer allowing the transmitter to transmit in this HARQ process. The data is therefore rendered inaccessible to a scheduler through the HARQ process. Other HARQ processes may continue transmitting the same stream of data as the deactivated HARQ process. The deactivation may be effected by the transmitter retransmission management module (reference 304 in Figure 3) sending a control signal to the transmitter HARQ module (reference 312 in Figure 3), comprising instructions to cause deactivation of the given HARQ process. A logical "1" may indicate that the HARQ process is active, whereas a "0" may indicate that the HARQ process is inactive and that no uplink data transmission is allowed in this specific HARQ process. A subset of deactivated HARQ processes may be stored in memory in a pool separate from where active HARQ processes are stored. The deactivated HARQ processes may be labelled accordingly. When a HARQ process is reactivated (e.g. in response to a RENACK signal being sent to the transmitter), the reactivated HARQ process is moved to the pool of active HARQ processes and the reactivated HARQ process resumes transmitting data.

At step 806, the transmitter may further store in memory (e.g. in the retransmission buffer) data related to the deactivated HARQ process, when an ALMOST-ACK is received for the data. In some embodiments, if, following the ALMOST-ACK signal (e.g. after a given time interval elapses), the transmitter receives no RENACK signal, the transmitter may discard the retransmission buffer. This may occur when the buffer size is limited. In other embodiments this may be implicit from the signaling used. For instance, if a message to reactivate a deactivated HARQ process only has a fixed number of five (5) bits, then at most 32 (2^5) additional HARQ processes need to be stored. When a deactivated HARQ process can no longer be referenced by the signaling, the deactivated HARQ process may be flushed from memory. It should therefore be understood that the process of discarding the retransmission buffer depends on implementation. After the transmitter deactivates the given HARQ process at step 804 and buffers the data, the transmitter may use a new HARQ process to carry on with data transmission (e.g. as if a positive acknowledgement had been received).

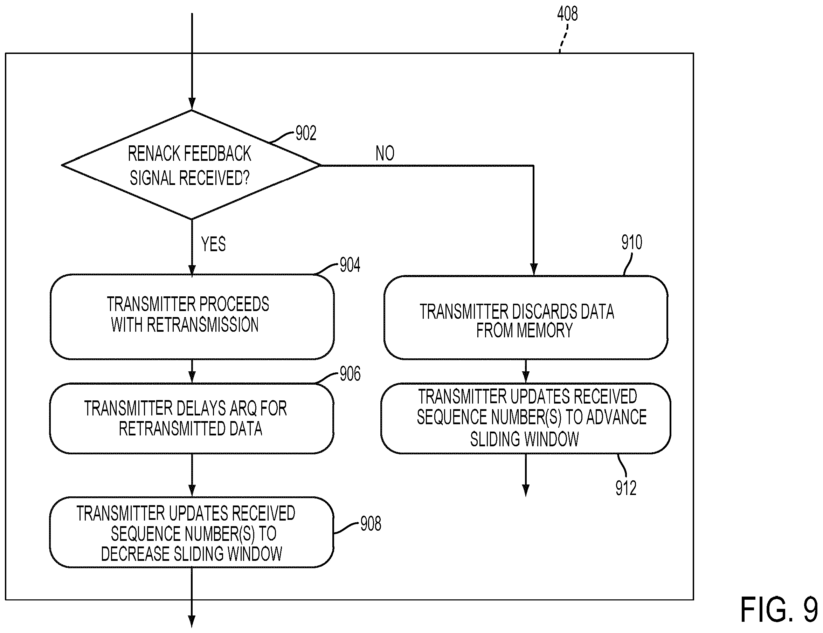

Referring now to Figure 9, the step 408 of retransmitting, at the transmitter, data (on request) may comprise determining at step 902 whether a RENACK feedback signal has been received from the receiver. Once a RENACK signal is received at the transmitter, the transmitter retransmission management module 304 proceeds with retransmission of the data at step 904. The transmitter retransmission management module 304 further causes, at step 906, a delay in the ARQ process for the retransmitted data. The transmission management module 304 updates, at step 908, the received sequence number(s) in order to decrease the sliding window. In some embodiments, the retransmission may be performed at step 904 as a reaction to a scheduling event (e.g. a grant) from an external controller (not shown). In some embodiments, the external controller is a part of a base station.

If the transmitter determined at step 902 that no RENACK feedback signal is received from the receiver, the transmitter accordingly discards the data from memory (e.g. from the retransmission buffer) at step 910. The transmitter then updates the received sequence number(s) at step 912 to advance the sliding window and allow transmission of new packets.

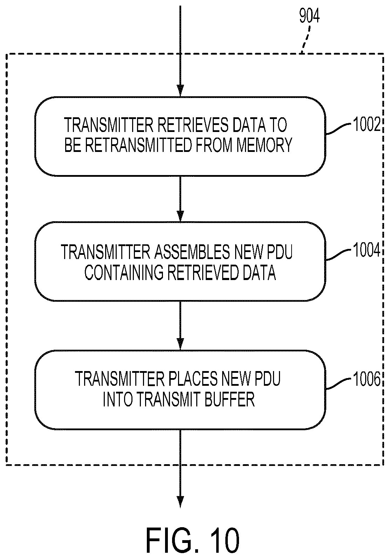

Figure 10 illustrates an embodiment where the transmitter proceeds with retransmission of the data (step 904). This step includes the transmitter retrieving data from memory (step 1002), wherein the retrieved data is data to be retransmitted. The transmitter may then assemble at step 1004 a new data unit (e.g. a new PDU) containing the retrieved data and place at step 1006 the new PDU into the transmission buffer. The new PDU may be assembled (e.g. segmented) taking into account the transmission rate supported by the MAC layer. The data placed in the transmission buffer may then be sent using a new HARQ process.

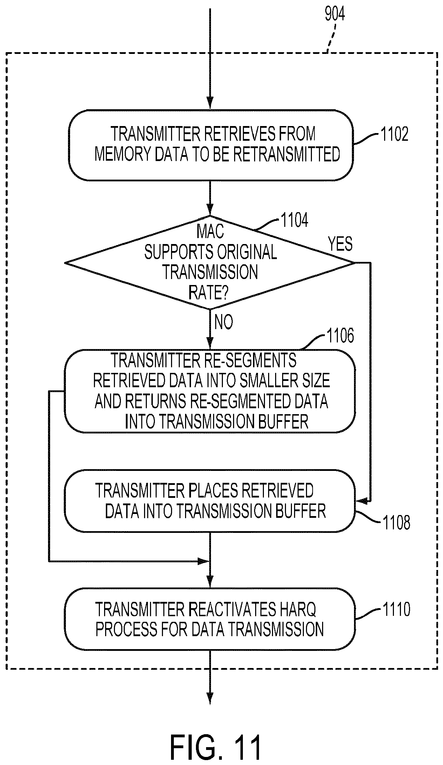

Referring to Figure 11, in another embodiment, the step 904 of proceeding with retransmission of the data may comprise the step 1102 of retrieving, at the transmitter, data (to be retransmitted) from memory. The transmitter may then determine at step 1104 whether the transmitter HARQ module (provided at the MAC layer) supports the original transmission rate for the retrieved data. If this is not the case, the next step 1106, at the transmitter, re-segments the retrieved data into a smaller available block size and returns the re-segmented data into the transmission buffer. Otherwise, if the transmitter determines at step 1104 that the transmitter HARQ module supports the original transmission rate, the transmitter places the retrieved data into the transmission buffer at step 1108. At step 1110, the transmitter reactivates the HARQ process with which the retrieved data (e.g. the previously-acknowledged data) was associated. The transmitter also causes the reactivated HARQ process to transmit the data placed in the transmission buffer. As discussed above, the HARQ process may be reactivated by the transmitter retransmission management module (reference 304 in Figure 3), sending a corresponding control signal to the transmitter HARQ module (reference 312 in Figure 3) further to a RENACK signal received at the transmitter.

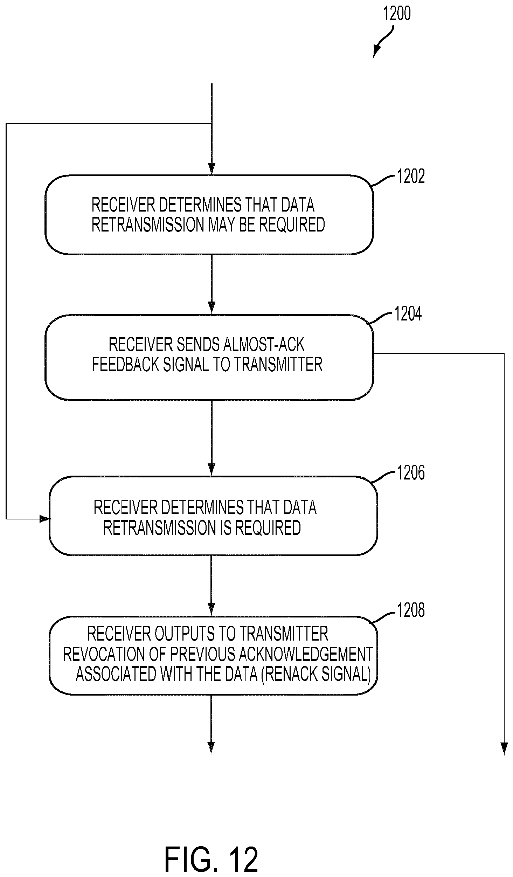

Referring to Figure 12, a method 1200 for data retransmission performed at a receiver (or receiving node), in accordance with an illustrative embodiment, will now be described. The method 1200 may be implemented at either or both of the receiver retransmission management modules 318a and 318b of Figure 3. In some embodiments, some method steps may be implemented at the receiver HARQ module 320 of Figure 3. Other implementations may apply. The method 1200 comprises determining, at step 1202, that retransmission of data (e.g. data previously transmitted by the transmitting node, as discussed above) may be required. This may come from the receiver determining that an assessment as to whether the retransmission of the data is required is inconclusive. In other words, the receiver concludes at step 1202 that it cannot fully determine whether retransmission of the data is required at this time. As a result, at step 1204, the receiver sends an ALMOST-ACK feedback signal to the transmitter to cause the transmitter to hold on to the previously-transmitted data and delay retransmission of the data. The receiver may then determine (e.g. ascertain), at step 1206, that retransmission of the data is required. As a result, at step 1208, the receiver sends a RENACK feedback signal comprising a revocation of a previous acknowledgement (e.g. a receipt acknowledgement) associated with the data to be retransmitted.

It should be understood that each one of the ALMOST-ACK and RENACK signals may be used alone or in combination, as discussed above. Therefore, the method 1200 of Figure 12 may comprise steps 1202 and 1204 only, steps 1206 and 1208 only, or all of steps 1202, 1204, 1206, and 1208.

The ALMOST-ACK signal may be sent at the receiver by the retransmission management module (reference 318a or 318b in Figure 3), which may be implemented at the RLC layer. It should be understood that the ALMOST-ACK signal may be sent through lower layers (e.g. at the MAC layer through the receiver HARQ module, reference 320 in Figure 3). The ALMOST-ACK signal may therefore be sent without involving the RLC layer. Once an ALMOST-ACK signal is received at the transmitter, the transmitter retransmission management module (reference 304 in Figure 3) proceeds accordingly (as discussed above with reference to Figure 8).

As discussed above, by sending the ALMOST-ACK signal, the receiver informs the transmitter that the receiver has not fully determined whether previously-transmitted data can be routed to its ultimate destination and, accordingly, whether retransmission of the data is required. For example, the receiver has not fully determined whether it can decode the data. In other cases, the receiver has not fully determined whether network issues (e.g. backhaul network failure) can prevent routing of the data. By sending the ALMOST-ACK signal, the receiver can prevent the transmitter from resending the given data unit until the receiver has determined whether retransmission is needed. In some embodiments, receipt of the ALMOST-ACK signal may indicate to the transmitter that the transmitter may receive from the receiver a request for retransmission (in the form of a RENACK signal) of previously-acknowledged data.

It should be understood that, depending on the implementation, various configurations may apply for signaling the RENACK signal. The RENACK signal may be sent at the receiver by the retransmission management module 318a or 318b, which may be implemented at the RLC layer. The RENACK signal may also be signaled through a special control message sent at any time (within reasonable delays) current RRC signaling occurs. The RENACK signal may also be sent through lower layers (e.g. at the MAC layer by the receiver HARQ module 320), where the timing of the RENACK signal would depend on lower layer messages. It should be understood that the RENACK signal may be sent through higher layer (e.g. RRC) messages.

In some embodiments, the receiver sends the RENACK signal periodically until the HARQ process, having sent the previously-acknowledged data, is restored and the previously-acknowledged data is received at its destination. In other embodiments, the receiver may only send the RENACK signal once. Other embodiments may apply.

The receiver may completely reactivate a given HARQ process through RENACK. Alternatively, the receiver may send the RENACK signal requesting retransmission for a specific RLC sequence number, which would be inferred from decoded data before and after that sequence number. The transmitter would then, upon receiving the RENACK signal, choose the HARQ process that transmitted the given RLC sequence number. Alternatively, temporal indication may be provided in the RENACK signal (e.g. indicating that data transmitted a given number of transmission time intervals (TTIs) ago should be retransmitted). Temporal indication may also be provided in a specified frame number. Also, the RENACK signal may refer to a sequence of HARQ processes, e.g. indicate that data transmitted a given number of successful HARQ processes ago should be retransmitted. Other embodiments may apply.

Moreover, in some cases, such as when the receiver makes assumptions as to whether data can be decoded, both the RENACK signal and the ALMOST-ACK signal may be generated by introducing one or more extra bits into the structure of data packets. As discussed above, higher layer (e.g. RRC) signaling may be used for RENACK, such that the RENACK signal may be routed towards the transmitter in the regular data channel (rather than in a dedicated channel). In other cases, every ACK signal may be considered as an ALMOST-ACK until a second ACK (or "Full" ACK) is subsequently received for the data at hand. The second ACK would serve as a confirmation that the data has indeed been received correctly. Alternatively, every ACK could be considered as an ALMOST-ACK until a timeout (having a predetermined value) expires.

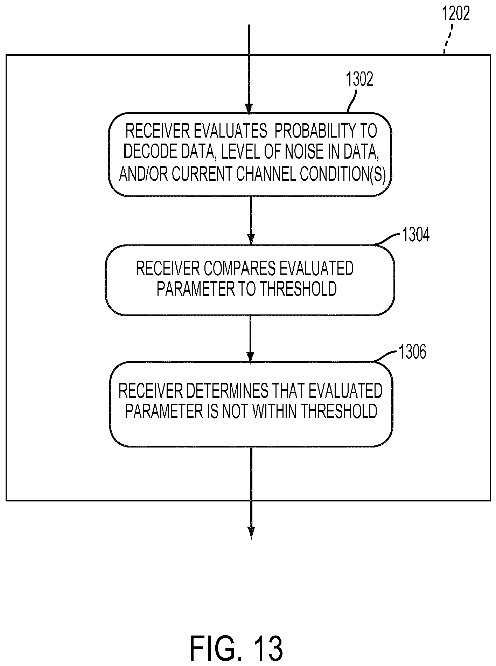

Referring to Figure 13, various situations may result in the receiver determining (at step 1202) that previously-acknowledged data may have to be retransmitted and the corresponding deactivated HARQ process recovered. In some embodiments, as illustrated in Figure 13, the step 1202 of determining that data retransmission may be required comprises evaluating, at the receiver, a parameter related to data transmission. Examples of the parameter include, but are not limited to, a probability of decoding the data, a signal quality (e.g. a level of noise in the data), and current channel conditions. The receiver then compares, at step 1304, the evaluated parameter to a threshold. If the receiver determines that the parameter is not within the threshold (step 1306), the receiver may then determine that there is a possibility that the previously-acknowledged data will have to be retransmitted (i.e. it is not clear yet whether retransmission is required) and that an ALMOST-ACK signal should therefore be sent.

For example, in the case of soft combining by a central processor provided at the receiver, the receiver may assess the quality (e.g. noise level) of the received signal and compare the signal quality to a predetermined threshold. If it is determined that the signal quality is not within the threshold (e.g. the noise level exceeds the noise level threshold value), the ALMOST-ACK signal is generated to indicate that the data may ultimately need to be resent. For example, the receiver may determine on the basis of the comparison that the received signal is noisy and that additional processing time is required to decode the signal.

Alternatively, the receiver may re-evaluate a previously estimated channel and determine that the channel conditions are worse than expected, e.g. the channel has either one or both of changed and was poorly estimated. The receiver would accordingly send an ALMOST-ACK signal to the transmitter.

In another example, the receiver may determine that the probability that it will fully decode the data previously- transmitted by the transmitter is sufficiently high (e.g. above a predetermined threshold) but it still needs to have a recovery process in place in case decoding fails. In this case, by sending an ALMOST-ACK to the transmitter, the receiver may (implicitly) acknowledge the data but cause the transmitter to retain the data in memory in case the receiver is not able to fully decode the data. In one embodiment, receipt of the ALMOST-ACK causes the transmitter to keep a copy of the HARQ process associated with the previously-transmitted data in a separate pool of memory. If the receiver ends up being unable to decode the data, the receiver would then send a RENACK signal to the transmitter to cause retransmission of the previously-acknowledged data.

In another example, the receiver may determine that the backhaul network might fail when pushing data upstream and may accordingly send an ALMOST-ACK signal to the transmitter.

In other embodiments, such as when joint reception is used, the receiver may determine that it will not be able to decode if a neighboring node does not send the data to the receiver (e.g. before a given time period elapses). The receiver may accordingly send an ALMOST-ACK signal to the transmitter, followed by a RENACK signal if the neighboring node ultimately fails to transmit the data and decoding fails.

In other embodiments, the transmitting node may, after sending a data unit to the receiving node, wait for a receipt acknowledgement (e.g. ACK) from the receiving node. If no such receipt acknowledgement is received after a predetermined time period has elapsed, the transmitting node may assume that the data unit was not properly received and conclude that the transmission was unsuccessful. The transmitting node may therefore prepare for retransmission. However, the receiving node may determine that it needs to delay retransmission of the data (e.g. to compute additional information). The receiving node may therefore send an ALMOST-ACK signal to the transmitting node to prevent the transmitting node from retransmitting the data until a given time period has elapsed (e.g. until the receiving node is done computing the additional information).

It should be understood that these examples are illustrative only and that various situations may result in the receiver sending ALMOST-ACK signals.

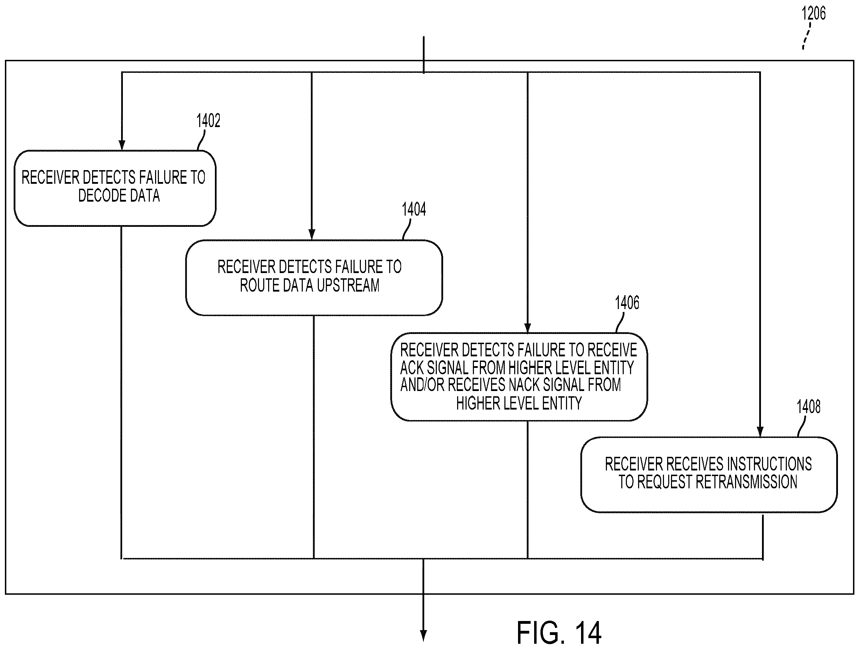

Referring now to Figure 14, various situations may result in the receiver determining (at step 1206) that retransmission of data, e.g. previously-acknowledged data, is required. The step 1206 of determining that data retransmission is required may therefore comprise one or more sub-steps.

In one example, RENACK signals may be sent in case of node failure, as detected at step 1402. In another example, data may be sent by a UE and received at base stations. However, the base stations may not be able to fully decode the received data. The base stations may therefore positively acknowledge the data (by the HARQ entity sending an ACK signal accordingly) yet pass the received data to upper protocol layers for further processing. If, after further processing, the base stations are still unable to decode the data, the base stations may send a RENACK feedback signal to the UE to indicate that the previously-acknowledged data is to be retransmitted. As a result, the UE would place the data in its transmission buffer for retransmission to the base stations, which would then be able continue to decode the data.

In another example, the receiver may detect (step 1404) a failure to route the data upstream. For example, the receiver (e.g. base station) may properly receive a data unit (e.g. a PDU), and accordingly send an ACK signal to the transmitter. However, the receiver may receive information from a backhaul network indicating that the data unit was dropped, for example, due to the multi-drop nature of the backhaul. The receiver would then send a RENACK signal to the transmitter to cause retransmission of the previously-acknowledged data unit. The RENACK signal may be sent to the transmitter without the receiver having to wait for information to be received from the TCP layer. Therefore, it is possible for the receiver to recover from the failure more quickly, e.g. before a TCP recovery process is even initiated.

In yet another example, a first base station (e.g. base station A) may properly receive a data packet and accordingly send an ACK signal to the transmitter. However, base station A may be unable to push the data upstream due to backhaul limitations. If base station B decoded the packet properly but is also unable to push data upstream, both base stations A and B may request retransmission of the packet so the packet can be received at a third point (e.g. base station C). In this case, at least one of base stations A and B (and possibly base station C) would send a RENACK signal to the transmitter.

In another example, the receiver may be configured to expect an ACK signal from a higher level entity, e.g. a virtual RLC aggregator. If the ACK is not received (or a NACK is received), as detected at step 1406, the receiver may then send a RENACK signal to the transmitter.

Alternatively, the receiver may send a RENACK signal according to instructions received from the higher level entity (step 1408).

It should be understood that the examples above are illustrative only and that other situations may result in the receiver outputting RENACK signals. Still, the receiver, in most cases, determines at step 1206 that data is to be resent and, accordingly, requests retransmission of the data by sending a RENACK signal to the transmitter. In one embodiment, the RENACK signal is typically sent if 1) the receiver determines that an acknowledgement was previously sent for the data (or inferred at the transmitter); and 2) the data was unsuccessfully decoded after one or more internal decoding processes have been exhausted or a time interval has elapsed.

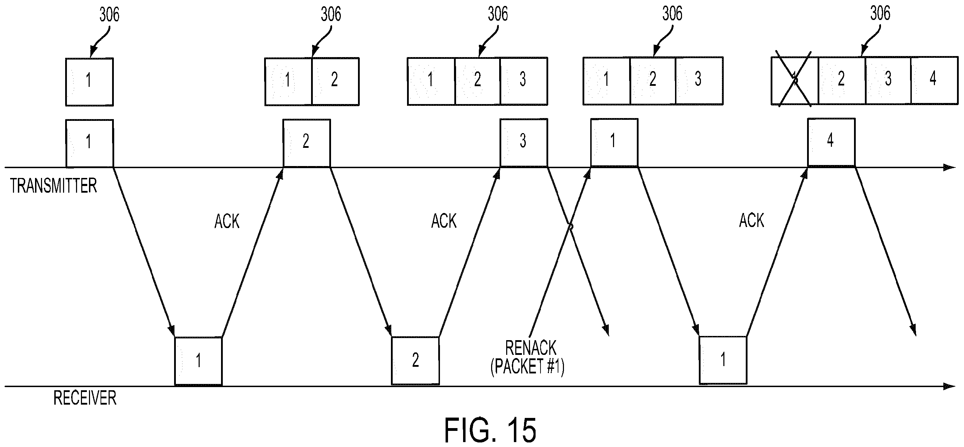

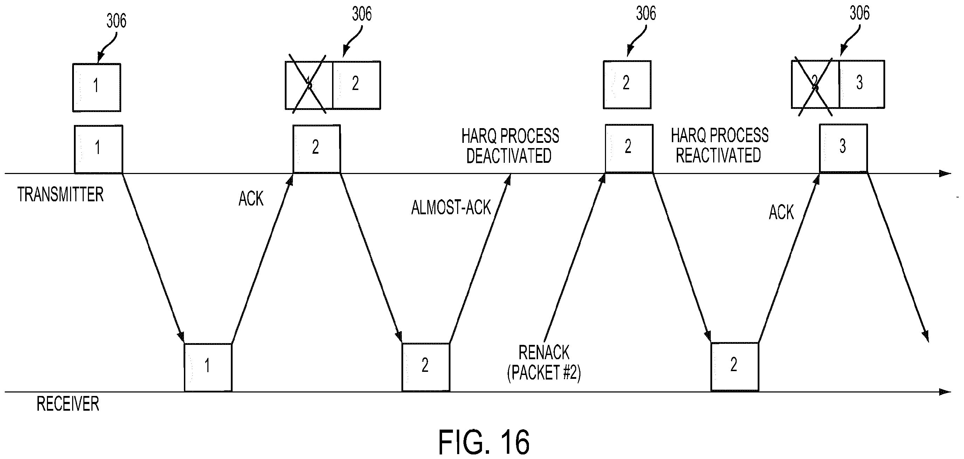

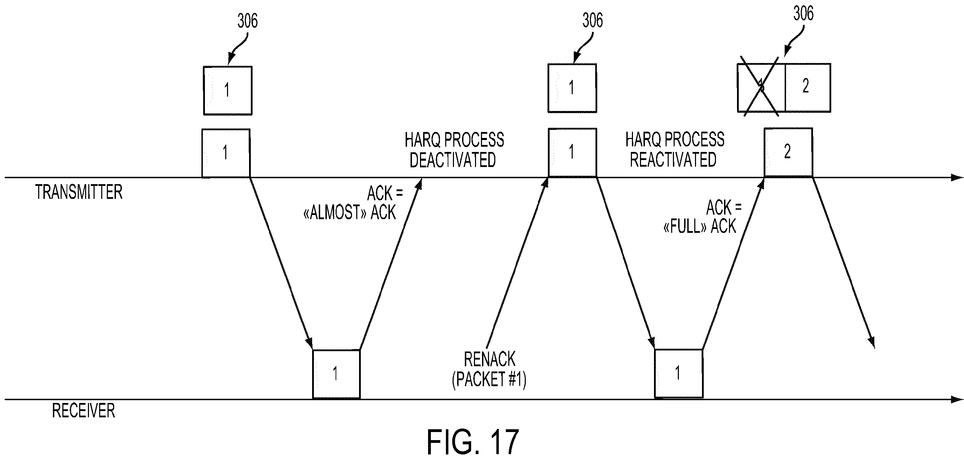

Referring to Figure 15, a first example of a data retransmission mechanism is illustrated. In this example, the RENACK signal is not used in combination with the ALMOST-ACK signal and it is assumed that the data to be retransmitted is data that was previously acknowledged. Although a single HARQ process is illustrated in Figure 15 (and in Figure 16 and Figure 17 discussed further below), it should be understood that multiple HARQ processes may run in parallel. Thus, although the packets have been labelled using consecutive numbering for the sake of simplicity, it should be understood that parallel HARQ processes may be used. Thus, the HARQ process illustrated in Figure 15 (and accordingly in Figure 16 and Figure 17) may send packets with a numbering that is not consecutive. In other words, other packets may be sent by other HARQ processes between the transmissions of the illustrated HARQ process.

In the example of Figure 16, all data transmitted through the transmitter HARQ process is stored in memory (e.g. in the retransmission buffer 306) over a predetermined period. The transmitter sends a first unit of data or packet (labelled with the numeral "1") to the receiver. The transmitter stores a copy of the first packet in the retransmission buffer 306. The receiver correctly receives the first packet and accordingly sends a positive acknowledgement (ACK) to the transmitter. The transmitter in turn transmits a second packet (labelled with the numeral "2") to the receiver and stores a copy of the second packet in the retransmission buffer 306.

The receiver then positively acknowledges the second packet and the transmitter accordingly sends a third packet (labelled with the numeral "3"). The transmitter also stores a copy of the third packet in the retransmission buffer 306. Shortly thereafter, the transmitter receives (from the receiver) a RENACK signal associated with the first packet. As discussed above, the RENACK signal may be received after a short delay and the timing of the RENACK signaling may depend on configuration requirements. In response to receiving the RENACK signal, the transmitter retrieves the copy of the first packet from the retransmission buffer 306 and retransmits the data to the receiver. If the transmitter was already preparing another data transmission when the RENACK signal is received, the transmitter may send this next transmission first before reacting to the received RENACK signal. Once the receiver positively acknowledges receipt of the re-transmitted first packet, the transmitter removes the first packet from the retransmission buffer 306 (if the buffer window is exceeded). The process may then continue, with a fourth packet (labelled with the numeral "4") being transmitted to the receiver.

Figure 16 illustrates a second example of the proposed data retransmission mechanism. In this example, the RENACK signal is used in combination with the ALMOST-ACK signal, with the ALMOST-ACK signal being explicitly distinguished from the ACK signal. In this second example, it is assumed that the data to be retransmitted was previously acknowledged. In this example, the transmitter only stores in its retransmission buffer 306 data, which is ALMOST-ACKed and which may need retransmission. As illustrated, a first packet (labelled with the numeral "1") is sent by the transmitter and buffered in the retransmission buffer 306. The first packet is then positively acknowledged (ACK) by the receiver and the transmitter accordingly removes the first packet from the retransmission buffer 306. The transmitter then transmits a second packet (labelled with the numeral "2") to the receiver and also stores the second packet in the retransmission buffer 306. The second packet is ALMOST-ACKed by the receiver, such that the HARQ process is deactivated. The transmitter receives from the receiver a RENACK signal for the second packet. The transmitter, therefore, reactivates the HARQ process, retrieves the second packet from the retransmission buffer 306, and retransmits the data to the receiver. Upon the receiver positively acknowledging receipt of the re-transmitted second packet (e.g. upon the receiver sending an ACK signal to the transmitter), the second packet is removed from the retransmission buffer 306. The process then carries on and a third packet (labelled with the numeral "3") is sent by the transmitter to the receiver.

Figure 17 illustrates a third example of the proposed data retransmission mechanism. In this example, the RENACK signal is used in combination with the ALMOST-ACK signal and it is assumed that the data to be retransmitted is previously-acknowledged data. In this example, the ALMOST-ACK signal is not explicitly distinguished from the ACK signal and every ACK signal is considered an ALMOST-ACK until a subsequent (or "FULL") ACK is received. As discussed above, every ACK signal may be considered an ALMOST-ACK signal until some other trigger, such as a timeout, RLC layer message, or the like, occurs. Also, in the illustrated example, the transmitter only stores in the retransmission buffer 306 data, for which a "FULL" ACK signal has not yet been received . As illustrated, a first packet (labelled with the numeral "1") is sent by the transmitter and buffered in the retransmission buffer 306. The receiver positively acknowledges the first packet and sends a first ACK signal accordingly. However, since the first ACK signal is considered an ALMOST-ACK, the transmitter deactivates the HARQ process and does not remove the first packet from the retransmission buffer 306. The receiver then sends a RENACK signal associated with the first packet. Upon receiving the RENACK signal, the transmitter reactivates the HARQ process, retrieves the first packet from the retransmission buffer 306, and retransmits the data to the receiver. The first packet is only removed from the retransmission buffer 306 when the receiver positively acknowledges receipt of the re-transmitted first packet (e.g. sends the second, or "FULL", ACK signal). The process may then carry on and a second packet (labelled with the numeral "2") is transmitted to the receiver.

Using the data retransmission methods and systems described above, it is possible to recover failed (e.g. previously-acknowledged) HARQ processes using the RENACK feedback signal. As a result, alternate routes may be used to forward data in multipoint reception. This, in turn, implies using alternate receivers. As a result, delay is decreased and throughput increased. Also, using the ALMOST-ACK feedback signal removes the need for waiting for hard detection of a given transport block to be made and for an ACK signal to be transmitted from an aggregation point (e.g. a final detection point provided above the base station(s)) back to the UE. This in turn prevents an increase in the number of parallel HARQ processes required for data transmission in addition to reducing signaling overhead and memory requirements.

The above description is meant to be exemplary only, and one skilled in the relevant arts will recognize that changes may be made to the embodiments described without departing from the scope of the invention disclosed. For example, the blocks or operations in the flowcharts and drawings described herein are for purposes of example only. There may be many variations to these blocks or operations without departing from the teachings of the present disclosure. For instance, the blocks may be performed in a differing order, or blocks may be added, deleted, or modified.

While illustrated in the block diagrams as groups of discrete components communicating with each other via distinct data signal connections, it will be understood by those skilled in the art that the present embodiments are provided by a combination of hardware and software components, with some components being implemented by a given function or operation of a hardware or software system, and many of the data paths illustrated being implemented by data communication within a computer application or operating system. Based on such understandings, the technical solution of the present invention may be embodied in the form of a software product. The software product may be stored in a non-volatile or non-transitory storage medium, which can be a compact disk read-only memory (CD-ROM), USB flash disk, or a removable hard disk. The software product includes a number of instructions that enable a computer device (personal computer, server, or network device) to execute the methods provided in the embodiments of the present invention. The structure illustrated is thus provided for efficiency of teaching the present embodiment. The present disclosure may be embodied in other specific forms without departing from the subject matter of the claims.

## Claims

1. A method (1200) for requesting data retransmission performed by a base station (204), the method comprising:
a.) receiving, in a data transmission from a user equipment (202) to the base station (204), data from the user equipment (202),
b.) determining that a retransmission of the received data may be required, and subsequently sending an ALMOST-ACK signal to the user equipment (202), wherein the ALMOST-ACK signal indicates to the user equipment (202) that the base station (204) has not fully determined whether a retransmission of the received data is required and that the retransmission is to be delayed until it is determined that the retransmission is required, wherein the ALMOST-ACK signal is not explicitly distinguished from an ACK signal and every ALMOST-ACK signal is considered an ALMOST-ACK signal until a subsequent ACK signal is received,
c.) determining that the retransmission is required by receiving information from a backhaul network indicating that the data were dropped in the backhaul network, thereby detecting a failure to route the received data upstream,
d.) subsequently sending a RENACK signal to the user equipment (202), wherein the RENACK signal indicates that the received data are to be retransmitted by the user equipment (202) to the base station (204).

2. A base station (204) configured to perform the method according to claim 1.

## Patentansprüche

1. Verfahren (1200) zum Anfordern einer Datenneuübertragung, das von einer Basisstation (204) ausgeführt wird, wobei das Verfahren Folgendes umfasst:
a.) Empfangen, bei einer Datenübertragung von einem Benutzergerät (202) zur Basisstation (204), von Daten von dem Benutzergerät (202)
b.) Ermitteln, dass eine Neuübertragung der empfangenen Daten erforderlich sein kann, und nachfolgendes Senden eines ALMOST-ACK-Signals an das Benutzergerät (202), wobei das ALMOST-ACK-Signal dem Benutzergerät (202) anzeigt, dass die Basisstation (204) nicht vollständig ermittelt hat, ob eine Neuübertragung der empfangenen Daten erforderlich ist und dass die Neuübertragung verzögert werden muss, bis ermittelt wird, dass die Neuübertragung erforderlich ist, wobei das ALMOST-ACK-Signal nicht ausdrücklich von einem ACK-Signal unterschieden wird und wobei jedes ALMOST-ACK-Signal als ein ALMOST-ACK-Signal betrachtet wird, bis ein nachfolgendes ACK-Signal empfangen wird,
c.) Ermitteln, dass die Neuübertragung erforderlich ist, indem Informationen von einem Backhaul-Netzwerk empfangen werden, die anzeigen, dass die Daten in dem Backhaul-Netzwerk gelöscht wurden, wodurch ein Fehler beim Routen der empfangenen Daten nach Upstream erkannt wird,
d.) nachfolgendes Senden eines RENACK-Signals an das Benutzergerät (202), wobei das RENACK-Signal anzeigt, dass die empfangenen Daten erneut von dem Benutzergerät (202) zur Basisstation (204) übertragen werden müssen.

2. Basisstation (204), die konfiguriert ist zum Ausführen des Verfahrens nach Anspruch 1.

## Revendications

1. Procédé (1200) de demande d'une retransmission de données, réalisé par une station de base (204), le procédé comprenant les étapes consistant à :
a.) recevoir, dans une transmission de données d'un équipement d'utilisateur (202) à la station de base (204), des données en provenance de l'équipement d'utilisateur (202),
b.) déterminer qu'une retransmission des données reçues peut être requise, puis envoyer un signal ALMOST-ACK à l'équipement d'utilisateur (202), le signal ALMOST-ACK indiquant à l'équipement d'utilisateur (202) que la station de base (204) n'a pas totalement déterminé si une retransmission des données reçues est requise et que la retransmission doit être retardée tant qu'il n'est pas déterminé que la retransmission est requise, le signal ALMOST-ACK n'étant pas explicitement distingué d'un signal ACK et tout signal ALMOST-ACK étant considéré comme un signal ALMOST-ACK tant qu'un signal ACK ultérieur n'est pas reçu,
c.) déterminer que la retransmission est requise en recevant des informations en provenance d'un réseau d'amenée indiquant que les données ont été ignorées dans le réseau d'amenée, de manière à détecter un défaut d'acheminement des données reçues en amont,
d.) envoyer ensuite un signal RENACK à l'équipement d'utilisateur (202), le signal RENACK indiquant que les données reçues doivent être retransmises par l'équipement d'utilisateur (202) à la station de base (204).

2. Station de base (204), configurée pour réaliser le procédé selon la revendication 1.
